# EUROPÄISCHE PATENTSCHRIFT

(11) **EP 2 409 810 B1**
(45) Veröffentlichungstag und Bekanntmachung des Hinweises auf die Patenterteilung: **11.09.2013**
(21) Anmeldenummer: 11005860.9
(22) Anmeldetag: 18.07.2011
(51) Int. Cl.: B23P 19/04, B62D 65/06

(54) **Verfahren zur Montage einer Tür an einem Fahrzeug**
Method for fitting a door to a vehicle
Procédé de montage d'une porte sur un véhicule

(30) Priorität: 21.07.2010 DE 102010031728
(43) Veröffentlichungstag der Anmeldung: 25.01.2012
(73) Patentinhaber: Audi AG, 85045 Ingolstadt (DE)
(72) Erfinder: Hirsch, Bernhard, 85049 Ingolstadt (DE)
(74) Vertreter: Engelhardt, Harald

(56) Entgegenhaltungen:
- EP-A2- 1 281 470
- DE-A1- 10 026 192
- DE-A1- 10 356 808

## Beschreibung

Die Erfindung betrifft ein Verfahren zur Montage einer Tür an einem Fahrzeug nach dem Oberbegriff des Anspruchs 1.

Der Montage der Türen an einem Fahrzeug kommt eine wesentliche Bedeutung zu, da es sich hierbei um eine Vereinigung von zwei Baugruppen (Tür und Fahrzeugkarosserie) handelt, die gegebenenfalls starken Toleranzschwankungen unterworfen sein können, so dass es bei einem unsachgemäßen Verbau einer Tür an einer Fahrzeugkarosserie zu unerwünscht ungleichmäßigen Spaltmaßen und Fluchten mit Bezug auf zum Beispiel Türrandbereich zur Fahrzeugkarosserie kommen kann. Dies ist oftmals nur durch mühsames und aufwendiges Nachjustieren der Türscharniere auszubessern.

Um ein derartiges Nachbessern auszuschließen, ist es aus der EP 1 281 470 B1 in Verbindung mit einem Verfahren zur Montage einer Tür an einem Kraftfahrzeug bereits bekannt, die die Tür mit der Fahrzeugkarosserie verbindenden Scharniere zweiteilig auszubilden und ein karosserieseitiges Scharnierteil unabhängig von einem türseitigen Scharnierteil mittels einer entsprechenden Hilfsvorrichtung an der Fahrzeugkarosserie festzulegen. Das türseitige Scharnierteil wird unabhängig davon an der Tür montiert, wobei zur Bestimmung der Position der türseitigen Scharnierteile mittels eines Messtasters die genau Lage der karosserieseitigen Scharnierteile erfasst und an eine Vorrichtung weitergeleitet wird, die diese Daten auswertet und dann die entsprechende Positionierung der türseitigen Scharnierteile an der Tür vorgibt. Konkret sind hierfür an einer Vorrichtung sogenannte Bezugslager verstellbar ausgebildet, wobei die Bezugslager für die türseitigen Scharnierlager entsprechend der der Fahrzeugkarosserie gemessenen Lage der Scharnierachsen der bereits befestigten karosserieseitigen Scharnierteile eingestellt werden.

Weiter ist aus der DE 103 56 808 A1 ein Verfahren zur passgenauen Anbringung einer Fahrzeugtür an einem Türpfosten bekannt, bei der für eine exakte Positionierung des Türscharniers vorgesehen ist, dass der an der Pfostenverstärkung angebrachte Befestigungsbolzen eine Bearbeitungsfläche aufweist, die nach einer individuellen Bearbeitung die formstabile Anlagefläche für die Türscharniere ausbildet.

Und weiter ist aus der DE 100 26 192 A1 ein Verfahren zum Einbau von Türen in ein Kraftfahrzeug bekannt, bei dem die Türe von Scharnieren gehalten wird, die zwei in Bezug zueinander verschwenkbare Scharnierhälften umfassen und so an der Türe bzw. an der Karosserie befestigt sind, dass nach dem Einbau der Türe nur die türseitigen Befestigungspunkte bei geöffneter Türe zugänglich sind. Um einen zweimaligen Einbau der Türen zu vermeiden, notwendige Richtarbeiten an den Türen weitestgehend zu verhindern und ein Trennen der Scharniere entbehrlich zu machen, wird hier vorgeschlagen, dass zuerst die aus den beiden Scharnierhälften bestehenden Scharniere an der Karosserie oder an der Türe angebracht werden, dass anschließend die freien Scharnierhälften der Scharniere vermessen werden, und dass bei der Vermessung ermittelte Positionsdaten der Scharnierhälften verwendet werden, um beim nachfolgenden Einbau der Türe Scharnierbefestigungsflächen auf der Türe in Bezug zu den freien türseitigen Scharnierhälften zu positionieren bzw. um die freien karosserieseitigen Scharnierhälften auf der Türe in Bezug zu Scharnierbefestigungsflächen auf der Karosserie zu positionieren. Demgegenüber ist es Aufgabe der vorliegenden Erfindung, ein Verfahren zur Montage einer Tür an einem Fahrzeug bereitzustellen, bei dem in Verbindung mit geteilten Scharnieren eine noch einfachere und letztendlich sogar voll automatisierte Positioniermöglichkeit von Fahrzeugtüren an einer Fahrzeugkarosserie unter gleichzeitiger Einsparung von Bauteil- und Fertigungskosten möglich wird.

Diese Aufgabe wird gelöst mit den Merkmalen der unabhängigen Ansprüche. Vorteilhafte Ausgestaltungen hierzu sind Gegenstand der darauf rückbezogenen Unteransprüche.

Erfindungsgemäß wird das wenigstens eine karosserieseitige Scharnierteil von einer ersten Hilfsvorrichtung an einem die Scharnierachse ausbildenden Scharnierachsenteilbereich, insbesondere an einer Bolzenaufnahme, aufgenommen und anschließend mittels der ersten Hilfsvorrichtung lage- und positionsgenau ausgerichtet an der Fahrzeugkarosserie positioniert sowie weiter anschließend festgelegt. Zudem werden erfindungsgemäß die türseitigen Scharnierteile mittels der weiteren, zweiten Hilfsvorrichtung an einem die Scharnierachse ausbildenden zweiten Scharnierachsenteilbereich, insbesondere an einem Achsbolzen der türseitigen Scharnierteile, aufgenommen und anschließend mittels der zweiten Hilfsvorrichtung lage- und positionsgenau ausgerichtet an der Tür positioniert sowie weiter anschließend festgelegt. Schließlich wird die Tür nach erfolgter Festlegung sämtlicher Scharnierteile ohne weitere Ausrichtung an dem oder den jeweils zugeordneten karosserieseitigen Scharnierteil(en) eingehängt.

Mit einer derartigen erfindungsgemäßen Lösung werden die beiden miteinander zu verbindenden Scharnierteile genau an der Scharnierachse und damit an der Bauteiltrennung aufgenommen, wodurch sich für die Scharnierteilverbindungen stets konstante und reproduzierbare Montage- und Anbauverhältnisse an der Fahrzeugkarosserie und an der Tür ergeben, was insgesamt dazu führt, dass sich fertigungstechnisch bedingte Toleranzen bzw. Ungenauigkeiten der Scharnierteile nicht nachteilig auf die Türmontage und damit das Spaltmaß zwischen Tür und Karosserie auswirken können. Da somit jeweils genau die Drehachsen der Scharnierteile aufgenommen und die Scharnierteile exakt an den jeweils zugeordneten Bauteilen positioniert sind, werden somit die Fertigungsschwankungen der Scharnierteile bzw. der Fahrzeugkarosserie und der Tür kompensiert, so dass die Bauteile einfachst über die die Scharnierachsen ausbildenden Scharnierbauteile zusammengefügt werden können. D.h., dass die miteinander zu verbindenden Scharnierbauteile nach wie vor günstig toleranzbehaftet gefertigt werden können und somit keine teuren, wenig toleranzbehafteten Präzisionsbauteile sein müssen.

Mit der erfindungsgemäßen Lösung lässt sich somit eine deutliche Qualitätsverbesserung bei der Montage einer Tür an einer Fahrzeugkarosserie erzielen, und zwar verbunden mit weniger Richtzeiten. Die Scharniertoleranzen werden dabei durch den geteilten Scharnieraufbau mit der Aufnahmepositionierung der jeweiligen Scharnierteile über deren Scharnierachsen auf der Basis des Fahrzeugkoordinatensystems sehr gut kompensiert, so dass auch die Fertigungsschwankungen der Bauteile sehr gut kompensiert werden können. Dadurch brauchen die beiden Scharnierteile (bzw. die Tür an der Fahrzeugkarosserie) nach erfolgter erfindungsgemäßer Positionierung der türseitigen und der scharnierseitigen Scharnierteile nur noch ohne jegliche weitere aufwendige Ausrichteinrichtung miteinander verbunden werden. Eine aufwendige Vorrichtung zur Endmontage der Fahrzeugtür an der Karosserie, die eine Ausrichtung der Tür an der Karosserie ermöglicht, kann somit dadurch vorteilhaft eingespart und durch eine einfache Vorrichtung ersetzt werden. Dadurch kann eine einfache voll automatisierte Fertigung auf einfache Weise realisiert werden.

Gemäß einer besonders bevorzugten Ausgestaltung wird die die karosserieseitigen und/oder türseitigen Scharnierteile aufnehmende Hilfsvorrichtung, insbesondere zu Beginn der Positionierung der Hilfsvorrichtung, lediglich an einem Haupt-Referenzpunkt ausgerichtet und/oder positioniert, welcher Haupt-Referenzpunkt beispielsweise durch eine karosserieseitige Ausnehmung gebildet ist, in die ein dornartiger Fortsatz der Hilfsvorrichtung formschlüssig eingreift, was aber die Anwesenheit weiterer, z.B. durch markante Bauteilpunkte oder -bereiche gebildeter Hilfs-Referenzpunkte selbstverständlich nicht ausschließt. Vorteilhaft kann somit hier mittels einer einzigen Hilfsvorrichtung und/oder mittels eines einzigen Haupt-Referenzpunktes eine im Wesentlichen gleiche, exakte Positionierung Scharnierteilen an der Fahrzeugkarosserie bzw. an der Tür erfolgen. Hierzu sind an der Hilfsvorrichtung die die Scharnierteile halternden Elemente bevorzugt so einstellbar, dass die Scharnierteile stets in der gewünschten Weise an der Fahrzeugkarosserie bzw. an der Tür angeordnet werden können.

Unter dem Begriff Haupt-Referenzpunkt wird im Rahmen der vorliegenden Erfindungsidee ein Referenzpunkt verstanden, der stets zwingend vorhanden sein muss und/oder der einen ersten formschlüssigen Eingriff zweier Bauteile herstellt, also z.B. ein hilfsvorrichtungsseitiger Dornfortsatz, der in eine karosserie- oder türseitige Ausnehmung eingreift. Unter einem Hilfs-Referenzpunkt wird dagegen ein in Abhängigkeit von der Lage und Ausrichtung des Haupt-Referenzpunktes im Grunde je nach Bauteilgeometrie oder -kontur beliebig festlegbarer markanter Bauteilbereich verstanden, an dem das Bauteil, insbesondere zeitlich nach der hergestellten Eingriffsverbindung am Haupt-Referenzpunkt, weiter ausgerichtet wird, also z.B. eine Türbrüstung, ein Fensterausschnitt bzw. eine Fensterbank, um nur einige Bereiche beispielhaft zu nennen.

Gemäß einer weiteren besonders bevorzugten erfindungsgemäßen Ausgestaltung ist vorgesehen, dass die Fahrzeugkarosserie auf einer

Karosserieseite mehrere, insbesondere zwei Türausschnitte aufweist, denen jeweils ein karosserieseitiger Türsäulenbereich als Anbindungsbereich der für jede Tür vorzusehenden karosserieseitigen Scharnierteile zugeordnet ist, wobei mittels der ersten Hilfsvorrichtung eine im Wesentliche gleichzeitige Positionierung der karosserieseitigen Scharnierteile, an den, den mehreren Türausschnitten zugeordneten karosserieseitigen Türsäulenbereichen erfolgt bzw. vorgenommen wird. Besonders bevorzugt erfolgt hierbei eine Ausrichtung und/oder Positionierung der ersten Hilfsvorrichtung lediglich an einem Haupt-Referenzpunkt eines der Türausschnitte, was die Anwesenheit von weiteren Hilfsreferenzpunkten, wie oben bereits dargestellt, selbstverständlich nicht ausschließt.

Weiter können jeweils zwei karosserieseitige Scharnierteile pro karosserieseitigem Türsäulenbereich vorgesehen sein, so dass mittels der Hilfsvorrichtung insgesamt vier karosserieseitige Scharnierteile im Wesentlichen gleichzeitig an der Fahrzeugkarosserie positioniert werden. Neben einer stabilen Anbindung einer Fahrzeugtür ergibt sich bei derartigen mehreren Scharnierteilen der besondere Vorteil, dass hier dann in einem einzigen Verfahrensschritt gleichzeitig sämtliche Scharnierteile mit wenig Aufwand und daher wenig zeitintensiv an der Fahrzeugkarosserie positioniert werden können, wobei besonders vorteilhaft lediglich eine Ausrichtung der Hilfsvorrichtung an einem Haupt-Referenzpunkt eines der Türausschnitte ausreicht.

Bevorzugt werden die karosserieseitigen Scharnierteile mittels der ersten Hilfsvorrichtung an der Fahrzeugkarosserie in zwei Fahrzeugkoordinatenrichtungen lage- und positionsgenau ausgerichtet positioniert, wobei die Ausrichtung in der dritten Fahrzeugkoordinatenrichtung durch die Anlageverbindung der karosserieseitigen Scharnierteile an der Fahrzeugkarosserie erfolgt. Nach erfolgter Positionierung und Ausrichtung werden die karosserieseitigen Scharnierteile an der Fahrzeugkarosserie festgelegt, insbesondere mittels wenigstens einer Schraubverbindung verschraubt. Anschließend wird dann die Hilfsvorrichtung von der Fahrzeugkarosserie weg bewegt. In einer bevorzugten konkreten Verfahrensführung hierzu wird vorgeschlagen, dass die karosserieseitigen Scharnierteile an der Fahrzeugkarosserie in Fahrzeuglängsrichtung (X-Richtung) und in Fahrzeughochachsenrichtung (Z-Richtung) lage- und positionsgenau ausgerichtet und positioniert werden. Die Ausrichtung in Fahrzeugquerrichtung (Y-Richtung) erfolgt dabei durch die Anlageverbindung der karosserieseitigen Scharnierteile an der Fahrzeugkarosserie.

Ebenso können die türseitigen Scharnierteile mittels der zweiten Hilfsvorrichtung an der jeweils zugeordneten Tür in zwei Fahrzeugkoordinatenrichtungen lage- und positionsgenau ausgerichtet positioniert werden, wobei die Ausrichtung in der dritten Fahrzeugkoordinatenrichtung durch die Anlageverbindung der türseitigen Scharnierteile an der Tür erfolgt. Nach einer derartig erfolgten Positionierung und Ausrichtung der türseitigen Scharnierteile werden diese an der Tür festgelegt, zum Beispiel mit wenigstens einer Schraubverbindung verschraubt. Anschließend wird dann auch hier die Hilfsvorrichtung von der Tür weg bewegt. Konkret können hierbei die türseitigen Scharnierteile mittels der weiteren Hilfsvorrichtung in Fahrzeugquerrichtung (Y-Richtung) und in Fahrzeughochachsenrichtung (Z-Richtung) lage- und positionsgenau ausgerichtet werden, wobei die Ausrichtung in Fahrzeuglängsrichtung (X-Richtung) dann durch die Anlageverbindung der türseitigen Scharnierteile an der Tür erfolgt, bevorzugt an einem in Fahrzeugquerrichtung (Y-Richtung) verlaufenden Türwand- bzw. Türaußenhautbereich.

Weiter ist es vorteilhaft, wenn die Tür vor der Positionierung der türseitigen Scharnierteile in einer Haltevorrichtung positioniert und dort mittels eines Referenzpunktsystems und/oder mittels einer Sensoreinrichtung in definierten Fahrzeugkoordinatenrichtungen (X-, Y-, Z-Richtung) ausgerichtet, gehaltert wird. Auch in Verbindung mit dem Verbau der türseitigen Scharnierteile an der Tür werden somit vorzugsweise Hilfseinrichtungen verwendet, deren einzelne Elemente so einstellbar sind, dass stets eine optimale Lage der Scharnierteile an der Tür und damit auch zum karosserieseitigen Scharnierteil sichergestellt ist.

Gemäß einer weiteren besonders bevorzugten Ausgestaltung der vorliegenden Erfindungsidee, insbesondere in Verbindung mit einer automatisierten Türmontage, ist vorgesehen, dass an der die karosserieseitigen oder die türseitigen Scharnierteile positionierenden Hilfsvorrichtung oder an jeder Hilfsvorrichtung eine Erfassungseinrichtung, insbesondere eine Kameraeinrichtung, angeordnet ist, mittels der, bei in eine definierte Montage-Ausgangsstellung bewegter Hilfsvorrichtung, bei der sich die Hilfsvorrichtung in einem definierten Abstand zu der Fahrzeugkarosserie oder der Tür befindet, die aktuelle Position eines karosserieseitigen oder türseitigen Haupt-Referenzpunktes bezüglich eines mit diesem in Eingriff zu bringenden hilfsvorrichtungsseitigen Referenzpunkt-Gegenelementes als Ist-Positionswert erfasst und mittels einer Auswerteeinrichtung mit einem vorgegebenen Soll-Positionswert verglichen wird. Bei einer festgestellten Abweichung erfolgt eine Lagekorrektur der jeweiligen Hilfsvorrichtung dergestalt, dass der Haupt-Referenzpunkt, z.B. eine Ausnehmung, und das diesem zugeordnete Referenzpunkt-Gegenelement, z.B. ein formschlüssig in die Ausnehmung einbringbarer Dornfortsatz, in einer Flucht liegen. Bei fluchtendem Haupt-Referenzpunkt und Referenzpunkt-Gegenelement werden diese in einem weiteren Montageschritt miteinander in Eingriff gebracht und damit die karosserieseitigen bzw. türseitigen Scharnierteile an der Fahrzeugkarosserie bzw. der Tür positioniert. Dadurch lässt sich auf einfache Weise ein vollautomatisierter Anbau der karosserieseitigen und/oder türseitigen Scharnierteile an der Fahrzeugkarosserie bzw. an der Tür erzielen, da die Vorpositionierung und Ausrichtung der Hilfsvorrichtung ebenso wie die endgültige Positionierung der Hilfsvorrichtung an der Fahrzeugkarosserie über die Erfassungseinrichtung, z.B. eine Kamera mit Bildauswertesoftware, selbsttätig erfolgt.

In diesem Zusammenhang ist es weiter besonders vorteilhaft, wenn an der die karosserieseitigen Scharnierteile positionierenden ersten Hilfsvorrichtung eine weitere Erfassungseinrichtung, insbesondere eine Kameraeinrichtung mit Bildauswertesoftware, angeordnet ist, mittels der, bei sich miteinander in Eingriff befindlichem Haupt-Referenzpunkt und Referenzpunkt-Gegenelement, die Position der ersten Hilfsvorrichtung in Fahrzeughochachsenrichtung (z-Richtung) bezüglich eines vom Haupt-Referenzpunkt beabstandeten Karosseriebereichs, z.B. einer Fensterbank der Fahrzeugkarosserie, als Vorspann-Istwert erfasst und mittels einer Auswerteeinrichtung mit einem vorgegebenen Vorspann-Sollwert verglichen wird, wobei die erste Hilfsvorrichtung bei einer festgestellten Abweichung um die durch den Haupt-Referenzpunkt gebildete Schwenkachse solange verschwenkt wird, bis der Vorspann-Istwert dem Vorspann-Sollwert entspricht. Nach der so erfolgten Ausrichtung der ersten Hilfsvorrichtung werden die karosserieseitigen Scharnierteile an der Fahrzeugkarosserie festgelegt. Durch die bereits bei der Scharnierteilpositionierung stattfindende Berücksichtigung der Türvorspannung, d.h. des Absackens bzw. Absetzens der an Fahrzeugkarosserie eingehängten Fahrzeugtür aufgrund deren Eigengewichts, wird sichergestellt, dass jede Türe mit einem exakten Spaltmaß an der Fahrzeugkarosserie montiert werden kann.

Ferner beansprucht die Erfindung auch eine Vorrichtung zur Durchführung eines Verfahrens nach einem der erfindungsgemäßen Verfahrensansprüche.

Die Erfindung wird nachfolgend anhand einer beispielhaften Zeichnung näher erläutert.

Es zeigen:
- Fig.1: schematisch eine perspektivische Seitenansicht einer Fahrzeugkarosserieseite mit einer Hilfsvorrichtung die gleichzeitig vier karosserieseitige Scharnierteile an den den beiden Türausschnitten zugeordneten karosserieseitigen Türsäulenbereichen positioniert,
- Fig.2: eine der Fig. 1 entsprechende Darstellung mit an den karosserieseitigen Türsäulenbereichen befestigten karosserieseitigen Scharnierteilen,
- Fig. 3a: schematisch und beispielhaft eine vergrößerte Darstellung der Einzelheit Z der Fig. 1, aus der die hilfsvorrichtungsseitige Aufnahme einer Bolzenaufnahme eines karosserieseitigen Scharnierteils ersichtlich ist,
- Fig. 3b: schematisch und beispielhaft eine vergrößerte Darstellung einer am Achsbolzen eines karosserieseitigen Scharnierteils angreifenden Hilfsvorrichtung,
- Fig. 4: eine perspektivische, schematische Darstellung einer beispielhaften Ausführungsform eines karosserieseitigen Scharnierteils,
- Fig. 5: eine perspektivische, schematische Darstellung einer beispielhaften Ausführungsform eines türseitigen Scharnierteils,
- Fig. 6: schematisch und perspektivisch die beiden Scharnierteile im zusammengesteckten bzw. zusammengefügten Zustand,
- Fig. 7: schematisch eine Fahrzeugtür,
- Fig. 8: schematisch eine Schnittdarstellung entlang der Linie A-A der Fig. 7 mit einer Draufsicht auf ein an der Tür angebundenes türseitiges Scharnierteil, und
- Fig. 9: eine lediglich äußerst schematische Darstellung einer Hilfsvorrichtung mit Kameraeinrichtungen.

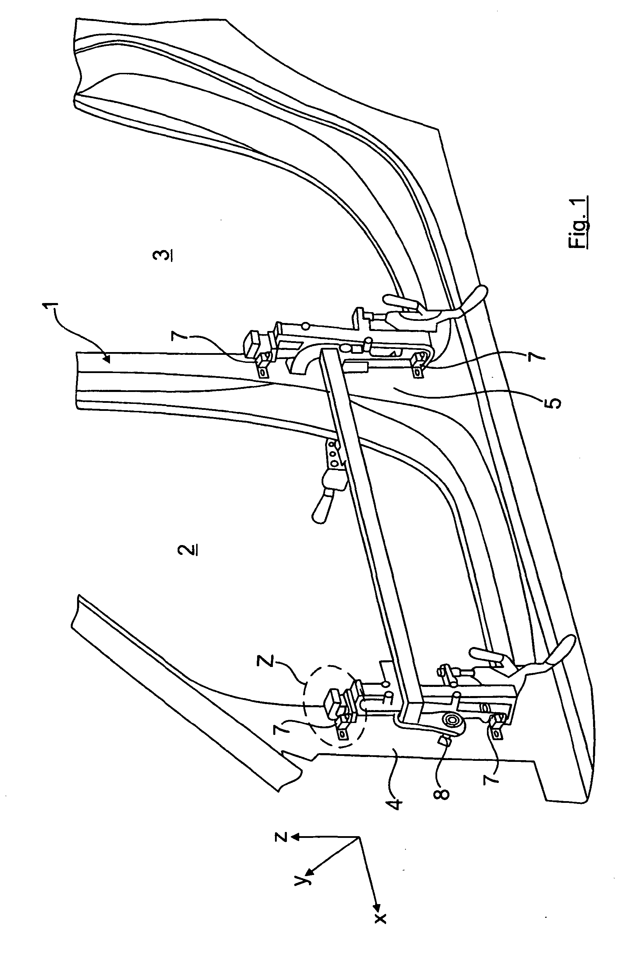

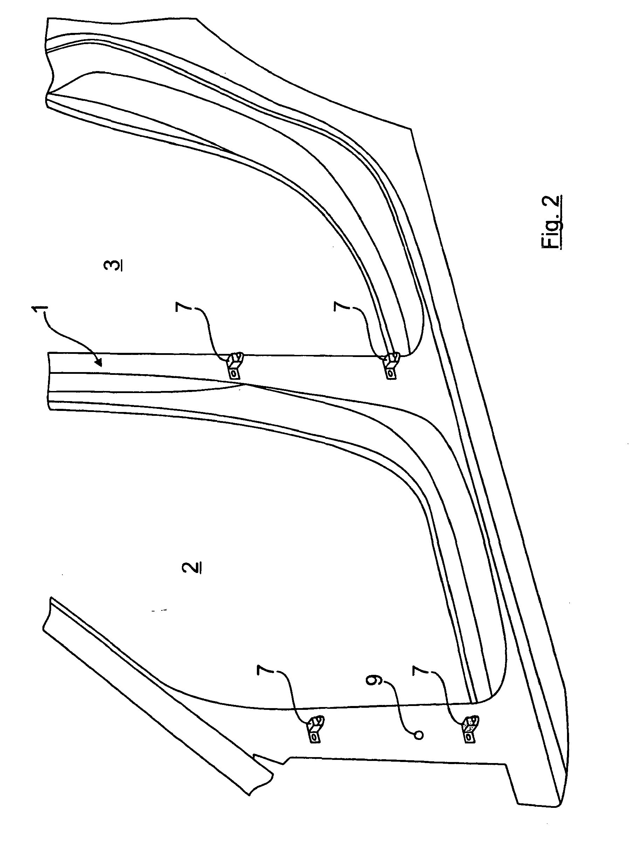

In der Fig. 1 ist schematisch eine Seite einer hier nicht vollständig dargestellten Fahrzeugkarosserie 1 dargestellt, welche Karosserieseite hier beispielhaft zwei Türausschnitte 2, 3 aufweist, an deren den jeweiligen Türausschnitten 2, 3 zugeordneten karosserieseitigen Türsäulenbereichen 4, 5 mittels einer hier lediglich äußerst schematisch und beispielhaft dargestellten Hilfsvorrichtung 6, gleichzeitig pro Türsäulenbereich 4, 5 je zwei in Fahrzeughochachsenrichtung z voneinander beabstandete karosserieseitige Scharnierteile 7 positioniert werden. Dabei bildet hier der in der Bildebene der Fig. 1 linke karosserieseitige Türsäulenbereich 4 Bestandteil einer A-Säule und der in der Bildebene der Fig. 2 demgegenüber rechte karosserieseitige Türsäulenbereich 5 Bestandteil einer B-Säule der Fahrzeugkarosserie.

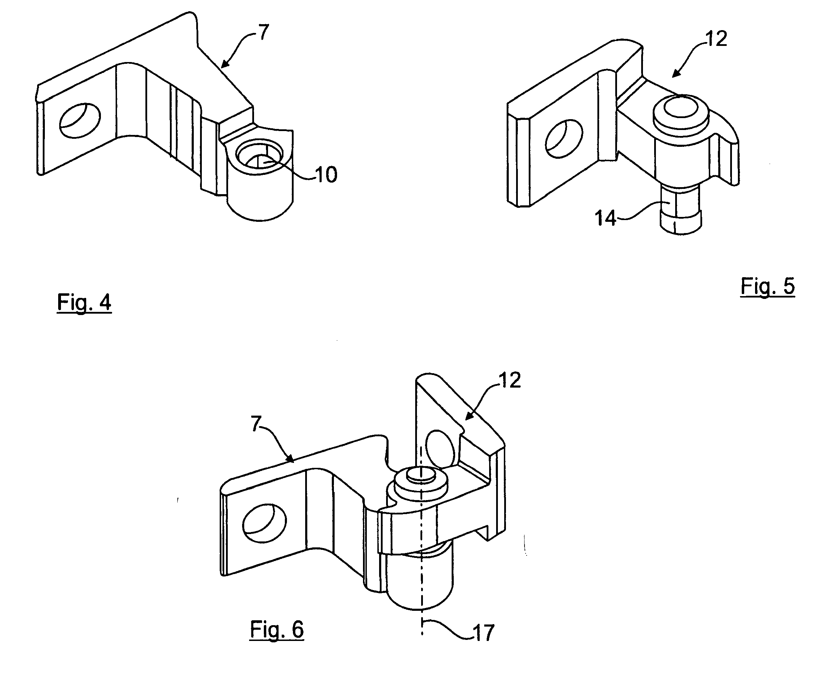

Eine vergrößerte Darstellung der Ausgestaltung der karosserieseitigen Scharnierteile 7 ist in der Fig. 4 gezeigt.

Die Positionierung der karosserieseitigen Scharnierteile 7 mittels der Hilfsvorrichtung 6 erfolgt bevorzugt unter Verwendung eines Referenzpunktsystems (RPS). In Verbindung mit diesem Referenzpunktsystem ist es bei der vorliegenden erfindungsgemäßen Verfahrensführung ausreichend, dass die Hilfsvorrichtung 6 zu Beginn ihrer Positionierung und Ausrichtung zum Beispiel mit einem hier lediglich äußerst schematisch dargestellten Dornfortsatz 8 formschlüssig in eine einen Haupt-Referenzpunkt 9 ausbildende Ausnehmung im karosserieseitigen Türsäulenbereich 4 eingreift. Anschließend wird die Hilfsvorrichtung dann weiter an einem Hilfs-Referenzpunkt ausgerichtet, z.B. an einem markanten türsäulenseitigen Karosseriebereich, so dass die Hilfsvorrichtung exakt ausgerichtet und lagegenau an der Fahrzeugkarosserie 1 positioniert ist.

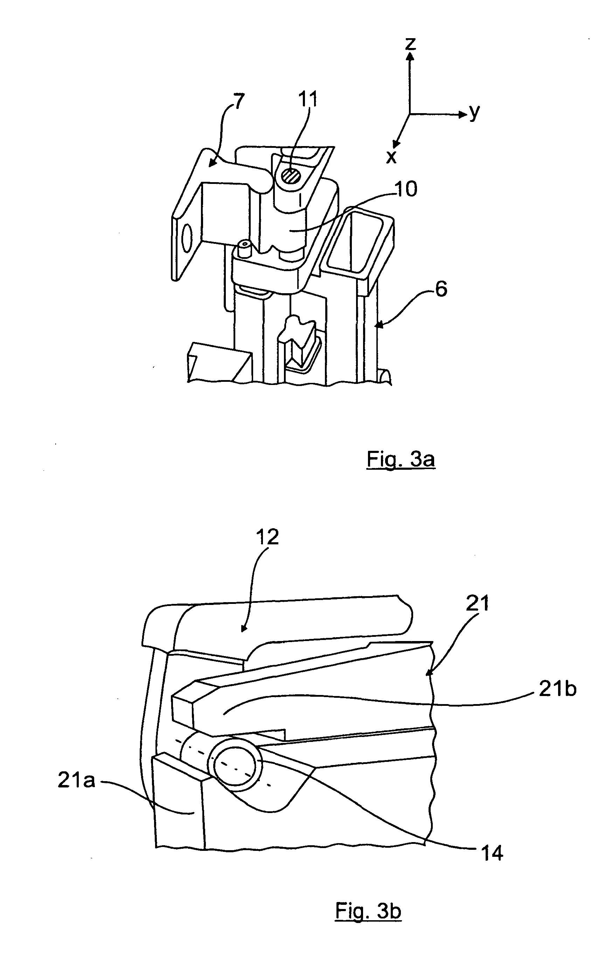

Die lagegenaue Positionierung und Ausrichtung der karosserieseitigen Scharnierteile 7 unter Verwendung des Referenzpunktsystems erfolgt dabei dergestalt, dass eine am karosserieseitigen Scharnierteil 7 ausgebildete Bolzenaufnahme 10 von der Hilfsvorrichtung 6, wie dies in der Fig. 3a lediglich äußerst schematisch und beispielhaft dargestellt ist, aufgenommen ist bzw. wird, zum Beispiel dergestalt, dass ein Dorn 11 in die Bolzenaufnahme 10 eingreift und durch diese hindurchgeführt ist. Die Hilfsvorrichtung 6 kann im Bereich des Dorns 11 bzw. der Bolzenaufnahme 10 so verstellt werden, dass die Bolzenaufnahme 10 und damit das karosserieseitige Scharnierteil 7 sowohl in Fahrzeuglängsrichtung (x-Richtung) als auch in Fahrzeughochachsenrichtung (z-Richtung) exakt in einer vorgegebenen, definierten Weise ausgerichtet sind. Die Ausrichtung in Fahrzeugquerrichtung (y-Richtung) erfolgt im hier vorliegenden Fall durch die Anlageverbindung der karosserieseitigen Scharnierteile 7 am jeweiligen karosserieseitigen Türsäulenbereich 4 bzw. 5 und damit an der Fahrzeugkarosserie 1.

Nach der so mittels der Hilfsvorrichtung 6 erfolgten exakten lagegenauen Positionierung der karosserieseitigen Scharnierteile 7 an der Fahrzeugkarosserie 1 können diese an der Fahrzeugkarosserie 1 mittels hier nicht im Detail dargestellter Schraubverbindungen festgelegt werden. Anschließend wird dann die Hilfsvorrichtung 6 von der Fahrzeugkarosserie 1 wegbewegt, so dass sich die in der Fig. 2 dargestellte exakte, lagegenaue Anordnung sämtlicher karosserieseitiger Scharnierteile 7 an einer mehrere Türausschnitte aufweisenden Karosserieseite einer Fahrzeugkarosserie 1 ergibt.

In analoger Weise können die karosserieseitigen Scharnierteile 7 auf der gegenüberliegenden Fahrzeugseite positioniert werden.

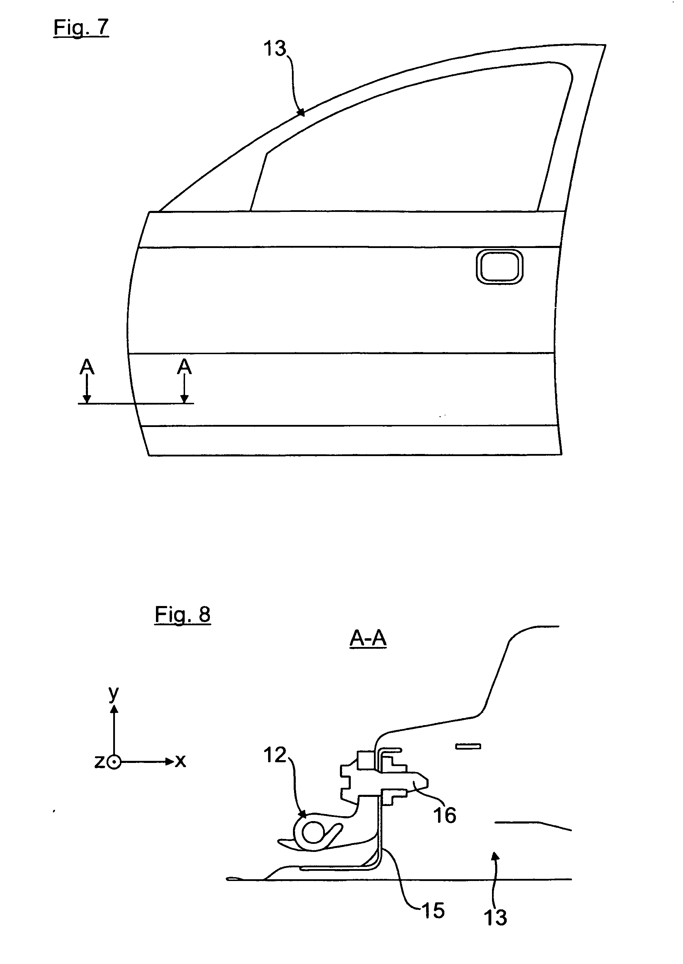

Unabhängig von der Positionierung und Festlegung der karosserieseitigen Scharnierteile 7 an den karosserieseitigen Türsäulenbereichen 4, 5, können die den karosserieseitigen Scharnierteilen 7 zugeordneten türseitigen Scharnierteile 12, von denen eines beispielhaft in einer vergrößerten Detaildarstellung in der Fig. 5 gezeigt ist, an der in der Fig. 7 und in der Fig. 8 schematisch dargestellten Karosseriebautür bzw. Tür 13 lagegenau ausgerichtet bevorzugt mittels eines Referenzpunktsystems positioniert werden.

Hierzu werden die türseitigen Scharnierteile 12 mittels einer hier nicht weiter dargestellten Hilfsvorrichtung an einem Achsbolzen 14, zum Beispiel mittels einer in der Fig. 3b lediglich äußerst schematisch dargestellten, Klemmbacken 21a, 21b aufweisenden Klemmbackenvorrichtung 21 oder dergleichen, aufgenommen und in den drei Achsrichtungen x, y und z des Fahrzeugkoordinatensystems unter bevorzugter Verwendung eines Referenzpunktsystems an einem hier im Wesentlichen in Fahrzeugquerrichtung (y-Richtung) verlaufenden Türaußenhautbereich 15 positioniert. Hierzu greift die hier nicht dargestellte Vorrichtung wieder in analoger Weise zu der Hilfsvorrichtung 6 zum Beispiel in einen ausnehmungsartigen Referenzpunkt an der Tür 13 bzw. am Türaußenhautbereich 15 ein bzw. an.

Nach dieser erfolgten Positionierung der die türseitigen Scharnierteile 12 aufnehmenden Hilfsvorrichtung werden die türseitigen Scharnierteile 12 in Fahrzeugquerrichtung (y-Richtung) und in Fahrzeughochachsenrichtung (z-Richtung) mittels der Hilfsvorrichtung lage- und positionsgenau ausgerichtet, während auch hier wiederum die Ausrichtung in Fahrzeuglängsrichtung (x-Richtung) durch die Anlageverbindung der türseitigen Scharnierteile 12 am Türaußenhautbereich 15 der Tür 13 erfolgt. Dies kann analog der zuvor in Verbindung mit den Fig. 1 bis 3 geschilderten Art und Weise erfolgen, d.h. unter Verwendung eines Haupt-Referenzpunktes und eines markanten Hilfs-Referenzpunktes.

Nach der exakten Ausrichtung und Positionierung der türseitigen Scharnierteile 12 an der Tür 13 werden diese mittels einer in der Fig. 8 lediglich äußerst schematisch dargestellten Schraubverbindung 16 am Türaußenhautbereich lagegenau festgelegt.

Im weiteren, letzten Verfahrensschritt wird dann die so vormontierte Tür 13 mittels ihrer Achsbolzen 14 einfachst in die karosserieseitigen Scharnierteile 7 des jeweils zugeordneten Türausschnitts 2 bzw. 3 eingehängt, und zwar ohne weitere Ausrichtnotwendigkeit. Dieses Verbinden ist schematisch in der Fig. 6 gezeigt, in der auch die Scharnierachse 17 eingezeichnet ist.

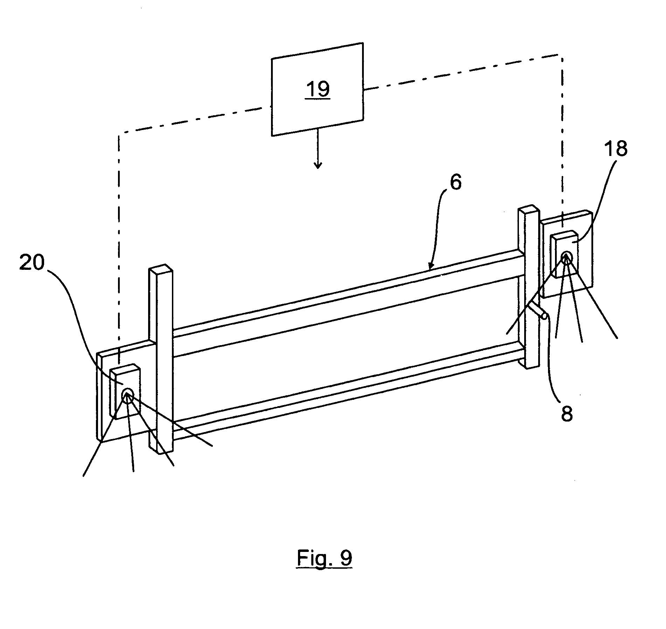

Insbesondere für den Fall, dass die Positionierung der Scharnierteile 7, 12 automatisiert erfolgen soll, kann, wie dies lediglich äußerst schematisch und beispielhaft in der Fig. 9 dargestellt ist, an der jeweiligen Hilfsvorrichtung, hier beispielhaft und bevorzugt der Hilfsvorrichtung 6, eine erste Kameraeinrichtung 18 angeordnet sein. Mittels dieser Kameraeinrichtung 18 kann, bei in eine definierte Montage-Ausgangsstellung bewegter Hilfsvorrichtung 6, bei der sich die Hilfsvorrichtung 6 in einem definierten Abstand zu der Fahrzeugkarosserie 1 befindet, die aktuelle Position des karosserieseitigen Haupt-Referenzpunktes 9 bezüglich der Position des mit diesem in Eingriff zu bringenden hilfsvorrichtungsseitigen Dornfortsatzes 8 als Ist-Positionswert erfasst und mittels einer Auswerteeinrichtung 19 mit einem vorgegebenen Soll-Positionswert verglichen werden. Im Falle einer festgestellten Abweichung erfolgt eine Lagekorrektur der ersten Hilfsvorrichtung 6 dergestalt automatisiert, dass der Haupt-Referenzpunkt 9 und der diesem zugeordnete Dornfortsatz 8 als Referenzpunkt-Gegenelement in Fahrzeugquerrichtung (y-Richtung) gesehen, in einer Flucht liegen. Bei fluchtendem Haupt-Referenzpunkt 9 und Dornfortsatz 8 werden diese in einem weiteren Montageschritt bevorzugt automatisiert miteinander in Eingriff gebracht.

Wie dies der schematischen Darstellung der Fig. 9 weiter entnehmbar ist, kann an der die karosserieseitigen Scharnierteile 7 positionierenden Hilfsvorrichtung 6 eine weitere Kameraeinrichtung 20 angeordnet sein, mittels der, bei sich miteinander in Eingriff befindlichem Haupt-Referenzpunkt 9 und Referenzpunkt-Gegenelement, die Position der Hilfsvorrichtung 6 in Fahrzeughochachsenrichtung (z-Richtung) bezüglich eines vom Haupt-Referenzpunkt beabstandeten Karosseriebereichs (Hilfs-Referenzpunkt) als Vorspann-Istwert erfasst und mittels einer Auswerteeinrichtung mit einem vorgegebenen Vorspann-Sollwert verglichen werden, wobei die Hilfsvorrichtung 6 bei einer festgestellten Abweichung um die durch den Haupt-Referenzpunkt 9 gebildete Schwenkachse solange verschwenkt wird, bis der Vorspann-Istwert dem Vorspann-Sollwert entspricht. Nach der so erfolgten Ausrichtung der Hilfsvorrichtung 6 werden dann die karosserieseitigen Scharnierteile 7 an der Fahrzeugkarosserie 1 festgelegt. Dadurch ist sichergestellt, dass die Tür 13 nach deren Einhängen und nach deren eigengewichtbedingtem Absacken mit exakt dem gewünschten Spalt- bzw. Sollmaß zu der Fahrzeugkarosserie 1 beabstandet ist.

## Patentansprüche

1. Verfahren zur Montage einer Tür an einem Fahrzeug,
bei dem wenigstens ein karosserieseitiges Scharnierteil (7) mittels einer ersten Hilfsvorrichtung (6) sowie mit Hilfe eines Referenzpunktsystems in definierte Fahrzeugkoordinatenrichtungen ausgerichtet an einem Türausschnitt der Fahrzeugkarosserie (1) positioniert und festgelegt wird, und
bei dem ein, mit dem wenigstens einen karosserieseitigen Scharnierteil (7) unter Ausbildung einer Scharnierachse zu verbindendes türseitiges Scharnierteil (12) mittels einer weiteren, zweiten Hilfsvorrichtung sowie mit Hilfe eines Referenzpunktsystems in definierte Fahrzeugkoordinatenrichtungen ausgerichtet an der Tür (13) positioniert und befestigt wird,
**dadurch gekennzeichnet,**
**dass** das wenigstens eine karosserieseitige Scharnierteil (7) von der ersten Hilfsvorrichtung (6) an einem die Scharnierachse ausbildenden Scharnierachsenteilbereich (10) aufgenommen und anschließend mittels der ersten Hilfsvorrichtung (6) lage- und positionsgenau ausgerichtet an der Fahrzeugkarosserie (1) positioniert wird,
**dass** das wenigstens eine türseitige Scharnierteil (12) mittels der weiteren, zweiten Hilfsvorrichtung an einem die Scharnierachse ausbildenden zweiten Scharnierachsenteilbereich (14) aufgenommen und anschließend mittels der zweiten Hilfsvorrichtung lage- und positionsgenau ausgerichtet an der jeweils zugeordneten Tür (13) positioniert wird, und
**dass** die Tür (13) nach erfolgter Festlegung der Scharnierteile (7, 12) an dem jeweils zugeordneten karosserieseitigen Scharnierteil (7) der zugehörigen Fahrzeugkarosserie (1) eingehängt wird.

2. Verfahren nach Anspruch 1, **dadurch gekennzeichnet, dass** die erste Hilfsvorrichtung (6) oder die zweite Hilfsvorrichtung lediglich an einem Haupt-Referenzpunkt (9) ausgerichtet und/oder positioniert wird oder die erste und zweite Hilfsvorrichtung (6) jeweils lediglich an einem Haupt-Referenzpunkt (9) ausgerichtet und/oder positioniert werden.

3. Verfahren nach Anspruch 1 oder 2, **dadurch gekennzeichnet,**
**dass** die Fahrzeugkarosserie (1) auf einer Karosserieseite mehrere Türausschnitte (2, 3) aufweist, denen jeweils ein karosserieseitiger Türsäuienbereich (4, 5) als Anbindungsbereich der für jede Tür (13) vorzusehenden karosserieseitigen Scharnierteile (7) zugeordnet ist, und
**dass** mittels der ersten Hilfsvorrichtung (6) eine im wesentlichen gleichzeitige Positionierung der karosserieseitigen Scharnierteile (7) an den, den mehreren Türausschnitten (2, 3) zugeordneten karosserieseitigen Türsäulenbereichen (4, 5) vorgenommen wird.

4. Verfahren nach Anspruch 3, **dadurch gekennzeichnet, dass** jeweils zwei karosserieseitige Scharnierteile (7) pro karosserieseitigem Türsäulenbereich (4, 5) vorgesehen sind, so dass mittels der Hilfsvorrichtung (6) vier karosserieseitige Scharnierteile (7) im Wesentlichen gleichzeitig an der Fahrzeugkarosserie (1) positioniert werden.

5. Verfahren nach einem der vorhergehenden Ansprüche, **dadurch gekennzeichnet, dass** die karosserieseitigen Scharnierteile (7) mittels der ersten Hilfsvorrichtung (6) in zwei Fahrzeugkoordinatenrichtungen lage- und positionsgenau ausgerichtet an der Fahrzeugkarosserie (1) positioniert werden, wobei die Ausrichtung in der dritten Fahrzeugkoordinatenrichtung durch die Anlageverbindung der karosserieseitigen Scharnierteile (7) an der Fahrzeugkarosserie (1) erfolgt, und wobei die karosserieseitigen Scharnierteile (7) nach erfolgter Positionierung und Ausrichtung an der Fahrzeugkarosserie (1) festgelegt werden, und
dass die türseitigen Scharnierteile (12) mittels der zweiten Hilfsvorrichtung in zwei Fahrzeugkoordinatenrichtungen lage- und positionsgenau ausgerichtet an der Tür (13) positioniert werden, wobei die Ausrichtung in der dritten Fahrzeugkoordinatenrichtung durch die Anlageverbindung der türseitigen Scharnierteile (12) an der Tür (13) erfolgt, und wobei die türseitigen Scharnierteile (12) nach erfolgter Positionierung und Ausrichtung an der Tür (13) festgelegt werden.

6. Verfahren nach Anspruch 5, **dadurch gekennzeichnet, dass** die karosserieseitigen Scharnierteile (7) mittels der ersten Hilfsvorrichtung (6) an der Fahrzeugkarosserie (1) in Fahrzeuglängsrichtung (x-Richtung) und in Fahrzeughochachsenrichtung (z-Richtung) lage- und positionsgenau ausgerichtet und positioniert werden, wobei die Ausrichtung in Fahrzeugquerrichtung (y-Richtung) durch die Anlageverbindung der karosserieseitigen Scharnierteile (7) an der Fahrzeugkarosserie (1) erfolgt.

7. Verfahren nach Anspruch 5 oder 6, **dadurch gekennzeichnet, dass** die türseitigen Scharnierteile (12) mittels der zweiten Hilfsvorrichtung an der Tür (13) in Fahrzeugquerrichtung (y-Richtung) und in Fahrzeughochachsenrichtung (z-Richtung) lage- und positionsgenau ausgerichtet und positioniert werden, wobei die Ausrichtung in Fahrzeuglängsrichtung (x-Richtung) durch die Anlageverbindung der türseitigen Scharnierteile (12) an der Tür (13) erfolgt.

8. Verfahren nach einem der vorhergehenden Ansprüche, **dadurch gekennzeichnet, dass** die Tür (13) vor der Positionierung der türseitigen Scharnierteile (12) in einer Haltevorrichtung positioniert und dort, mittels eines Referenzpunktsystems und/oder mittels einer Sensoreinrichtung in definierten Fahrzeugkoordinatenrichtungen ausgerichtet, gehaltert wird.

9. Verfahren nach einem der vorhergehenden Ansprüche, **dadurch gekennzeichnet, dass** an der die karosserieseitigen oder türseitigen Scharnierteile (7, 12) positionierenden Hilfsvorrichtung (6) oder an jeder Hilfsvorrichtung (6) eine Erfassungseinrichtung angeordnet ist, mittels der, bei in eine definierte Montage-Ausgangsstellung bewegter Hilfsvorrichtung (6), bei der sich die Hilfsvorrichtung (6) in einem definierten Abstand zu der Fahrzeugkarosserie (1) oder der Tür (13) befindet, die aktuelle Position eines karosserieseitigen oder türseitigen Haupt-Referenzpunktes (9) bezüglich des mit diesem in Eingriff zu bringenden hilfsvorrichtungsseitigen Referenzpunkt-Gegenelementes als Ist-Positionswert erfasst und mittels einer Auswerteeinrichtung mit einem vorgegebenen Soll-Positionswert verglichen wird, wobei bei einer festgestellten Abweichung eine Lagekorrektur der Hilfsvorrichtung (6) dergestalt erfolgt, dass der Haupt-Referenzpunkt (9) und das diesem zugeordnete Referenzpunkt-Gegenelement in einer Flucht liegen, und
dass bei fluchtendem Haupt-Referenzpunkt (9) und Referenzpunkt-Gegenelement diese in einem weiteren Montageschritt miteinander in Eingriff gebracht und damit die jeweiligen Scharnierteile (7) an der Fahrzeugkarosserie (1) bzw. an der Tür (13) positioniert werden.

10. Verfahren nach Anspruch 9, **dadurch gekennzeichnet, dass** an der die karosserieseitigen Scharnierteile (7) positionierenden ersten Hilfsvorrichtung (6) eine weitere Erfassungseinrichtung angeordnet ist, mittels der, bei sich miteinander in Eingriff befindlichem Haut-Referenzpunkt (9) und Referenzpunkt-Gegenelement, die Position der ersten Hilfsvorrichtung (6) in Fahrzeughochachsenrichtung (z-Richtung) bezüglich eines vom Haupt-Referenzpunkt beabstandeten Karosseriebereichs als Vorspann-Istwert erfasst und mittels einer Auswerteeinrichtung mit einem vorgegebenen Vorspann-Sollwert verglichen wird, wobei die erste Hilfsvorrichtung (6) bei einer festgestellten Abweichung um die durch den Haupt-Referenzpunkt (9) gebildete Schwenkachse solange verschwenkt wird, bis der Vorspann-Istwert dem Vorspann-Sollwert entspricht, und
dass nach der so erfolgten Ausrichtung der ersten Hilfsvorrichtung (6) die karosserieseitigen Scharnierteile (7) an der Fahrzeugkarosserie (1) festgelegt werden.

11. Vorrichtung zur Durchführung eines Verfahrens nach einem der vorhergehenden Verfahrensansprüche.

## Claims

1. Method for mounting a door on a vehicle, in which at least one bodywork-side hinge part (7) is positioned on and fitted to a door cutout of the vehicle bodywork (1), in an orientation in defined vehicle coordinate directions, by means of a first auxiliary device (6) and using a reference point system, and in which a door-side hinge part (12) to be connected to the at least one bodywork-side hinge part (7), thereby forming a hinge axis, is positioned on and fixed to the door (13), in an orientation in defined vehicle coordinate directions, by means of another, second auxiliary device and using a reference point system, **characterised in that** the at least one bodywork-side hinge part (7) is received by the first auxiliary device (6) on a hinge axis portion (10) forming the hinge axis and then positioned in a precisely located and positioned orientation on the vehicle bodywork (1) by means of the first auxiliary device (6), **in that** the at least one door-side hinge part (12) is received by means the other, second auxiliary device on a second hinge axis portion (14) forming the hinge axis and then positioned in a precisely located and positioned orientation on the respectively assigned door (13) by means of the second auxiliary device, and **in that**, after successful fitting of the hinge parts (7, 12), the door (13) is hung on the respectively assigned bodywork-side hinge part (7) of the corresponding vehicle bodywork (1).

2. Method according to claim 1, **characterised in that** the first auxiliary device (6) or the second auxiliary device is oriented and/or positioned only at a main reference point (9) or the first and second auxiliary devices (6) are each oriented and/or positioned only at a main reference point (9).

3. Method according to either claim 1 or claim 2, **characterised in that** the vehicle bodywork (1) has on one bodywork side a plurality of door cutouts (2, 3) which are each assigned a bodywork-side door-post region (4, 5) as a joining region for the bodywork-side hinge parts (7) provided for each door (13), and **in that** a substantially simultaneous positioning of the bodywork-side hinge parts (7) on the bodywork-side door-post regions (4, 5) assigned to the plurality of door portions (2, 3) is performed by means of the first auxiliary device (6).

4. Method according to claim 3, **characterised in that** two bodywork-side hinge parts (7) are provided per bodywork-side door-post region (4, 5), in such a way that four bodywork-side hinge parts (7) are positioned basically simultaneously on the vehicle bodywork (1) by means of the auxiliary device (6).

5. Method according to any of the preceding claims, **characterised in that** the bodywork-side hinge parts (7) are positioned in a precisely located and positioned orientation in two vehicle coordinate directions on the vehicle bodywork (1) by means of the first auxiliary device (6), the orientation in the third vehicle coordinate direction being carried out by the bearing connection of the bodywork-side hinge parts (7) to the vehicle bodywork (1), and the bodywork-side hinge parts (7) being fitted to the vehicle bodywork (1) after successful positioning and orientation, and **in that** the door-side hinge parts (12) are positioned in a precisely located and positioned orientation in two vehicle coordinate directions on the door (13), the orientation in the third vehicle coordinate direction being carried out by the bearing connection of the door-side hinge parts (12) to the door (13), and the door-side hinge parts (12) being fitted after successful positioning and orientation on the door (13).

6. Method according to claim 5, **characterised in that** the bodywork-side hinge parts (7) are oriented and positioned on the vehicle bodywork (1) in a precisely located and positioned manner in the longitudinal direction of the vehicle (x direction) and in the vertical axis direction of the vehicle (z direction), the orientation in the transverse direction of the vehicle (y direction) being carried out by the bearing connection of the bodywork-side hinge parts (7) to the vehicle bodywork (1).

7. Method according to either claim 5 or claim 6, **characterised in that** the door-side hinge parts (12) are oriented and positioned on the door (13) in a precisely located and positioned manner in the transverse direction of the vehicle (y direction) and in the vertical axis direction of the vehicle (z direction) by means of the second auxiliary device, the orientation in the longitudinal direction of the vehicle (x direction) being carried out by the bearing connection of the door-side hinge parts (12) to the door (13).

8. Method according to any of the preceding claims, **characterised in that** the door (13) is positioned in a holding device prior to the positioning of the door-side hinge parts (12) and, in said holding device, is held in an orientation in defined vehicle coordinate directions by means of a reference point system and/or by means of a sensor apparatus.

9. Method according to any of the preceding claims, **characterised in that** a detection apparatus is arranged on the auxiliary device (6) which positions the bodywork-side or door-side hinge parts (7, 12) or on each auxiliary device (6), by means of which detection apparatus, when the auxiliary device (6) has been moved into a defined starting position for mounting, the auxiliary device (6) being at a defined spacing from the vehicle bodywork (1) or the door (13), the current position of a bodywork-side or door-side main reference point (9) with respect to the auxiliary device-side reference point counter element to be brought into engagement with said main reference point is detected as an actual position value and is compared with a pre-determined target position value by means of an evaluation apparatus, if a deviation is established, a location correction of the auxiliary device (6) being carried out such that the main reference point (9) and the reference point counter element assigned thereto are aligned, and **in that**, when aligned, the main reference point (9) and the reference point counter element are brought into mutual engagement in another mounting step and the respective hinge parts (7) are thus positioned on the vehicle bodywork (1) or on the door (13).

10. Method according to claim 9, **characterised in that** another detection apparatus is arranged on the first auxiliary device (6) which positions the bodywork-side hinge parts (7), by means of which other detection apparatus, when the main reference point (9) and the reference point counter element are in mutual engagement, the position of the first auxiliary device (6) in the vertical axis direction of the vehicle (z direction) with respect to a bodywork region spaced apart from the main reference point is detected as a biasing actual value and compared with a predetermined biasing target value by means of an evaluation apparatus, if a deviation is established, the first auxiliary device (6) being pivoted about the pivot axis formed by the main reference point (9) until the biasing actual value corresponds to the biasing target value, and **in that** the bodywork-side hinge parts (7) are fitted to the vehicle bodywork (1) after the first auxiliary device (6) has been oriented in this manner.

11. Device for implementing a method according to any of the preceding method claims.

## Revendications

1. Procédé servant au montage d'une portière sur un véhicule,
dans lequel au moins une partie charnière (7) côté carrosserie est positionnée et fixée, au moyen d'un premier dispositif d'aide (6) ainsi qu'à l'aide d'un système de points de référence, de manière orientée dans des directions définies de coordonnées de véhicule au niveau d'une découpe de portière de la carrosserie de véhicule (1), et
dans lequel une partie charnière (12) côté portière à relier à l'au moins une la partie charnière (7) côté carrosserie, en formant un axe de charnière, est positionnée et fixée, au moyen d'un deuxième dispositif d'aide supplémentaire ainsi qu'à l'aide d'un système de points de référence, de manière orientée dans des directions définies de coordonnées de véhicule, au niveau de la portière (13),
**caractérisé en ce**
**que** l'au moins une partie charnière (7) côté carrosserie est logée par le premier dispositif d'aide (6), au niveau d'une zone partielle d'axe de charnière (10) formant l'axe de charnière et est ensuite positionnée, au moyen du premier dispositif d'aide (6), de manière orientée, avec précision en termes de situation et de position au niveau de la carrosserie de véhicule (1),
**que** l'au moins une partie charnière (12) côté portière est logée au moyen du deuxième dispositif d'aide supplémentaire, au niveau d'une deuxième zone partielle d'axe de charnière (14) formant l'axe de charnière et est ensuite positionnée, au moyen du deuxième dispositif d'aide, de manière orientée, avec précision en termes de situation et de position, au niveau de la portière (13) respectivement associée, et
**que** la portière (13) est accrochée après la fixation réussie des parties charnières (7, 12) au niveau de la partie charnière (7) côté carrosserie respectivement associée de la carrosserie de véhicule (1) associée.

2. Procédé selon la revendication 1, **caractérisé en ce que** le premier dispositif d'aide (6) ou le deuxième dispositif d'aide est orienté et/ou positionné uniquement au niveau d'un point de référence principal (9), ou les premier et deuxième dispositifs d'aide (6) sont orientés et/ou positionnés respectivement uniquement au niveau d'un point de référence principal (9).

3. Procédé selon la revendication 1 ou 2, **caractérisé en ce que** la carrosserie de véhicule (1) présente sur un côté de carrosserie plusieurs découpes de portière (2, 3), auxquelles est associée respectivement une zone de montants de portière (4, 5) côté carrosserie en tant que zone d'attache des parties charnières (7) côté carrosserie à prévoir pour chaque portière (13),
et
qu'un positionnement essentiellement simultané des parties charnières (7) côté carrosserie est entrepris au niveau des zones de montants de portière (4, 5) côté carrosserie associées aux plusieurs découpes de portière (2, 3) au moyen du premier dispositif d'aide (6).

4. Procédé selon la revendication 3, **caractérisé en ce que** respectivement deux parties charnières (7) côté carrosserie sont prévues par zone de montants de portière (4, 5) côté carrosserie, si bien que quatre parties charnières (7) côté carrosserie sont positionnées, au moyen du dispositif d'aide (6), essentiellement de manière simultanée au niveau de la carrosserie de véhicule (1).

5. Procédé selon l'une quelconque des revendications précédentes, **caractérisé en ce que** les parties charnières (7) côté carrosserie sont positionnées au moyen du premier dispositif d'aide (6), de manière orientée, avec précision en termes de situation et de position, dans deux directions de coordonnées de véhicule au niveau de la carrosserie de véhicule (1), dans lequel l'orientation dans la troisième direction de coordonnées de véhicule est effectuée par l'assemblage en appui des parties charnières (7) côté carrosserie au niveau de la carrosserie de véhicule (1), et dans lequel les parties charnières (7) côté carrosserie sont fixées après un positionnement et une orientation réussis au niveau de la carrosserie de véhicule (1), et
que les parties charnières (12) côté portière sont positionnées, au moyen du deuxième dispositif d'aide,
dans deux directions de coordonnées de véhicule, de manière orientée, avec précision en termes de situation et de position, au niveau de la portière (13), dans lequel l'orientation dans la troisième direction de coordonnées de véhicule est effectuée par l'assemblage en appui des parties charnières (12) côté portière au niveau de la portière (13), et dans lequel les parties charnières (12) côté portière sont fixées après le positionnement et l'orientation réussis au niveau de la portière (13).

6. Procédé selon la revendication 5, **caractérisé en ce que** les parties charnières (7) côté carrosserie sont orientées et positionnées, au moyen du premier dispositif d'aide (6), au niveau de la carrosserie de véhicule (1) dans la direction longitudinale du véhicule (direction x) et dans la direction axiale verticale du véhicule (direction z) avec précision en termes de situation et de position, dans lequel l'orientation dans la direction transversale du véhicule (direction y) est effectuée par l'assemblage en appui des parties charnières (7) côté carrosserie au niveau de la carrosserie de véhicule (1).

7. Procédé selon la revendication 5 ou 6, **caractérisé en ce que** les parties charnières (12) côté portière sont orientées et positionnées, au moyen du deuxième dispositif d'aide, au niveau de la portière (13) dans la direction transversale du véhicule (direction y) et dans la direction axiale verticale du véhicule (direction z) avec précision en termes de situation et de position, dans lequel l'orientation dans la direction longitudinale du véhicule (direction x) est effectuée par l'assemblage en appui des parties charnières (12) côté portière au niveau de la portière (13).

8. Procédé selon l'une quelconque des revendications précédentes, **caractérisé en ce que** la portière (13) est positionnée dans un dispositif de maintien avant le positionnement des parties charnières (12) côté portière et y est maintenue au moyen d'un système de points de référence et/ou au moyen d'un système capteur de manière orientée dans des directions définies de coordonnées de véhicule.

9. Procédé selon l'une quelconque des revendications précédentes, **caractérisé en ce qu'**un système de détection est disposé au niveau du dispositif d'aide (6) positionnant les parties charnières (7, 12) côté carrosserie ou côté portière ou au niveau de chaque dispositif d'aide (6), système de détection au moyen duquel, dans le cas d'un dispositif d'aide (6) déplacé dans une position initiale de montage définie, pour laquelle le dispositif d'aide (6) se trouve à une distance définie par rapport à la carrosserie de véhicule (1) ou à la portière (13), la position instantanée d'un point de référence principal (9) côté carrosserie ou côté portière par rapport au contre-élément du point de référence côté dispositif d' aide à amener en prise avec ledit point de référence principal est détectée en tant que valeur de position réelle et est comparée avec une valeur de position théorique prédéfinie au moyen d'un système d'évaluation, dans lequel en cas de constatation d'un écart, une correction de situation du dispositif d'aide (6) est effectuée de telle manière que le point de référence principal (9) et le contre-élément du point de référence associé à ce dernier sont en alignement, et que lorsque le point de référence principal (9) et le contre-élément du point de référence sont en alignement, ces derniers sont amenés en prise l'un avec l'autre lors d'une autre étape de montage et ainsi les parties charnières (7) respectives sont positionnées au niveau de la carrosserie de véhicule (1) ou au niveau de la portière (13).

10. Procédé selon la revendication 9, **caractérisé en ce qu'**est disposé au niveau du premier dispositif d'aide (6) positionnant les parties charnières (7) côté carrosserie un autre système de détection, au moyen duquel, lorsque le point de référence principal (9) et le contre-élément du point de référence sont en prise l'un avec l'autre, la position du premier dispositif d'aide (6) dans la direction axiale verticale du véhicule (direction z) par rapport à une zone de la carrosserie espacée du point de référence principal est détectée en tant que valeur réelle de précontrainte et est comparée avec une valeur théorique de précontrainte prédéfinie au moyen d'un système d'évaluation, dans lequel le premier dispositif d'aide (6) en cas de constatation d'un écart est pivoté autour de l'axe de pivotement formé par le point de référence principal (9) jusqu'à ce que la valeur réelle de précontrainte corresponde à la valeur théorique de précontrainte, et qu'après l'orientation réussie du premier dispositif d'aide (6), les parties charnières (7) côté carrosserie sont fixées au niveau de la carrosserie de véhicule (1).

11. Dispositif servant à la mise en oeuvre d'un procédé selon l'une quelconque des revendications précédentes.
